# EUROPEAN PATENT SPECIFICATION

(11) **EP 0 614 449 B1**
(45) Date of publication and mention of the grant of the patent: **05.02.1997**
(21) Application number: 92923607.3
(22) Date of filing: 25.11.1992
(51) Int. Cl.: C03C 17/32, C03C 17/00, B05D 1/18, B05D 3/06, B05C 3/09

(54) **IMPROVEMENTS IN OR RELATING TO AN ARTICLE COATING METHOD AND APPARATUS**
VERBESSERUNGEN IN BEZUG AUF EIN VERFAHREN UND EINE VORRICHTUNG ZUR BESCHICHTUNG VON GEGENSTÄNDEN
AMELIORATION CONCERNANT UN PROCEDE ET UN APPAREIL DE REVETEMENT D'ARTICLES

(30) Priority: 25.11.1991 AU 9676/91
(43) Date of publication of application: 14.09.1994
(73) Proprietor: INTERNATIONAL PARTNERS IN GLASS RESEARCH, North Clayton, VIC 3168 (AU); The BOC Group plc, Windlesham Surrey GU20 6HJ (GB)
(72) Inventor: BOWES, Robert, c/- Osaka Sanso Kogyo Ltd, 4-1-14 Myahara Yodogawa-Ku Osaka 532 (JP); MATSUMOTO, Yoshihiro 4-723, Minamida-cho, Kyoto (JP); Kamada, Yutaka, Hyogo 662 (JP)
(74) Representative: Wilkinson, Stephen John
(86) International application number: AU9200627
(87) International publication number: WO9311079

(56) References cited:
- EP-A- 0 142 583
- AU-A- 5 726 573
- AU-A- 7 094 191
- AU-B- 5 726 573
- US-A- 4 022 155
- US-A- 4 264 658
- US-A- 4 321 281
- US-A- 4 436 764
- PATENTS ABSTRACTS OF JAPAN, C-183, page 163; & JP,A,58 098 303
- F. RODRIGUEZ, "Principles of Polymer Systems", published 1983, by McGraw-Hill Book Company Japan Ltd, page 70, lines 15-18.
- PATENTS ABSTRACTS OF JAPAN, C-183, page 163; & JP,A,58 098 303 (SEKISUI FINE CHEMICAL K.K.) 11 June 1983 (11.06.83), see whole Abstract.

## Description

This invention relates generally to an improvement in a method and apparatus for the application of a coating to an exterior surface of articles, and in particular to such a method and apparatus in which fragile articles are dip coated with a monomer or polymer material in order to increase their dynamical strength. The method and apparatus are applicable to generally cylindrical glass articles such as cylindrical bottles and other containers in order to increase their resistance and inpact strengths against breakage, and it will be convenient to hereinafter describe the invention in relation to that exemplary application. It is to be appreciated, however, that the invention is not limited to that application.

Australian patent application 70941/91 discloses a method and apparatus in which glass containers are dipped in a material in order to apply an exterior coating of the material. A preferred coating material used with the method and apparatus is a monomer or polymer resin in a solvent base. A generally used solvent is methyl ethyl ketone (MEK). A material containing about 75% MEK has been found to provide an acceptably cured coating. The applied coating has a thickness of up to about 10 µm (microns), with consistent thicknesses of about 5 to 6 µm (microns) of the preferred coating material being achieved with the method and apparatus.

Although the method and apparatus performs generally satisfactorily, and achieves acceptable article coating, difficulties associated with the use of the preferred coating material are envisaged.

It is well recognised that MEK is a highly volatile solvent presenting significant risks of a fire or explosion at the apparatus worksite. That is particularly so in the exemplary application were the apparatus is conveniently sited on a lehr conveyor for dip coating heated glass containers. In addition, the solvent fumes evaporated during thermal aging of the coating provide an unpleasant, and possibly harmful, working environment for the apparatus operators. Thus, the method and apparatus present a potentially hazardous situation.

In an effort to minimise that situation, the apparatus of patent application 70941/91 has been provided with an air ventilation system to dilute and exhaust the solvent fumes from about the apparatus. However, the exhaustion of the fumes has been to the atmosphere with a consequent loss of the solvent. Moreover, that atmospheric emission of the solvent may be environmentally unsound.

In using the method and apparatus of the aforementioned patent application, a minimum coating thickness of about 5 to 6 µm (microns) has been consistently achieve. Problems arise in obtaining thinner coating thicknesses of about 1 to 3 µm (microns). In that regard, the coating becomes difficult to cure in the air atmosphere provided because oxygen inhibits the curing process so that the coating cures from the inside (next to glass interface) out. However, it is recognised that a thinner coating would be more economical in the sense of reducing the amount and thus cost of the coating, whilst the dynamical strength in the coated containers may not be unacceptably degradated.

Satisfactory curing of the coating material has been found to require relatively high energy ultraviolet light radiation units. This is because of the limited available locations of those units relative to the passing articles, as well as the environment in which they operate. Those units have a high capital cost and are expensive to operate, adding to the overall article coating cost structure.

In addition, it has been found that MEK solvent entering the curing zone leads to solvent cracking causing soot to deposit on the ultraviolet light radiation units. That in turn gradually blocks the ultraviolet light from reaching the container surface and thus impairs coating curing. As a result, coating quality can vary, causing a variable container quality.

An object of the present invention is to alleviate these disadvantages through the provision of an improved protective coating method and apparatus.

Another object of the present invention is to provide a protective coating method and apparatus which has a safer and cleaner operation than previous similar arrangements.

A further object of the present invention is to provide a more efficient method and apparatus for applying a protective coating to fragile articles such as glass bottles and other glass containers.

According to the present invention, there is provided a method for coating exterior surfaces of heated glass containers exiting from a lehr at a controlled temperature, including: conveying the containers along a coating path extending successively through a dipping zone, a thermal ageing zone and a curing zone of a coating chamber so that the containers are arranged in a non-contact relationship with one another; dipping the containers being conveyed through the dipping zone at least partially into a bath of ultraviolet light radiation curable liquid coating material so as to apply a coating of the coating material to exterior surfaces of the containers; thermally ageing the applied coating of containers being conveyed through the thermal ageing zone; and, subjecting the coated containers being conveyed through the curing zone to irradiation with ultraviolet light radiation for curing the coating, the containers being dipped, thermally aged and irradiated within an atmosphere inert to the coating material, the inert gas atmosphere having a pressure gradient extending along the coating path causing flow of the inert gas within the coating chamber generally in a direction from the curing zone toward the dipping zone, the inert gas thereby entraining coating material vapours for removal away from the curing zone.

According to the present invention, there is provided an apparatus for coating exterior surfaces of heated glass containers exiting from a lehr at a controlled temperature, including: a coating chamber having a dipping zone, a thermal ageing zone and a curing zone; conveying means defining a coating path extending successively through the dipping, thermal ageing and curing zones of the coating chamber, and operable to convey the containers along the coating path so that the containers are arranged in a non-contact relationship with one another; a coating vessel in the dipping zone for containing a bath of ultraviolet light radiation curable liquid coating material, the conveying means being arranged to dip containers being conveyed thereby along the coating path so as to apply a coating of the coating material to exterior surfaces of the containers; radiation means in the curing zone operable to subject the coated containers being conveyed along the coating path to irradiation with ultraviolet light radiation for curing the coating; and, means providing a controlled atmosphere in the coating chamber so that the atmosphere within the dipping zone, thermal ageing zone and curing zone is inert to the coating material, the controlled atmosphere means including at least one inlet to the coating chamber for supplying fresh inert gas thereto and at least one outlet from the coating chamber for withdrawal of inert gas therefrom, the inlet and outlet being located so that flow of the inert gas within the coating chamber is generally in a direction from the curing zone toward the dipping zone, the inert gas thereby entraining coating material vapours for removal away from the curing zone.

In at least one embodiment, dipping of the containers within the coating material, thermal ageing of the applied coating and irradiation of the coated containers occurs within a nitrogen gas atmosphere. The controlled atmosphere means is operable to provide the nitrogen gas atmosphere in this embodiment.

In at least one embodiment, pressure of the inert gas atmosphere in the curing zone is higher than the pressure of the gas atmosphere in the thermal ageing zone, which in turn is higher than the pressure of the gas atmosphere in the dipping zone.

Preferably, fresh inert gas is supplied to the curing zone and coating material vapour entrained inert gas is withdrawn from the dipping zone. In at least one embodiment, fresh inert gas is also supplied to the thermal ageing zone and the dipping zone. Preferably the controlled atmosphere means includes at least one inlet to the coating chamber for supplying fresh inert gas thereto and at least one outlet from the dipping zone for withdrawal of inert gas therefrom. The inlet and outlet are located so as to achieve the above flow of the inert gas within the coating chamber. Preferably, the controlled atmosphere means includes at least one inlet in the curing zone and at least one outlet in the dipping zone. Moreover, the coating atmosphere means preferably further includes at least one inlet to the thermal ageing zone and dipping zone for supplying fresh inert gas thereto.

Preferably, the inert gas atmosphere in the coating chamber is sealed from a surrounding air atmosphere so as to inhibit ingress of air into the coating chamber and egress of coating material vapour from the coating chamber. Moreover, preferably the inert gas atmosphere has a pressure which is higher than the surrounding air atmosphere pressure.

To that end, the coating chamber preferably has an inlet through which the containers enter the chamber and an outlet through which the containers exit the chamber. Gas seals are preferably provided at the inlet and outlet enabling container passage therethrough whilst inhibiting ingress of air into the coating chamber and egress of coating material vapour from the coating chamber.

Preferably, the thermal ageing zone is sealed from the curing zone so as to inhibit entry of coating material vapours from the thermal ageing zone into the curing zone. Moreover, the dipping zone is preferably also sealed from the thermal ageing zone so as to inhibit entry of coating material vapours from the dipping zone into the thermal ageing zone. Sealing between the zones is achieved with gas seals, in at least one embodiment.

Preferably, the inert gas and entrained coating material vapours are removed from the coating chamber and processed to recover the coating material vapours. Further, the inert gas, stripped of the coating material vapours, is preferably made available for recycling to the coating chamber. In at least one embodiment, the stripped inert gas is preferably recycled into the dipping zone. Preferably that is achieved with gas processing means, the processing means having an inlet into the dipping zone for the recycled inert gas.

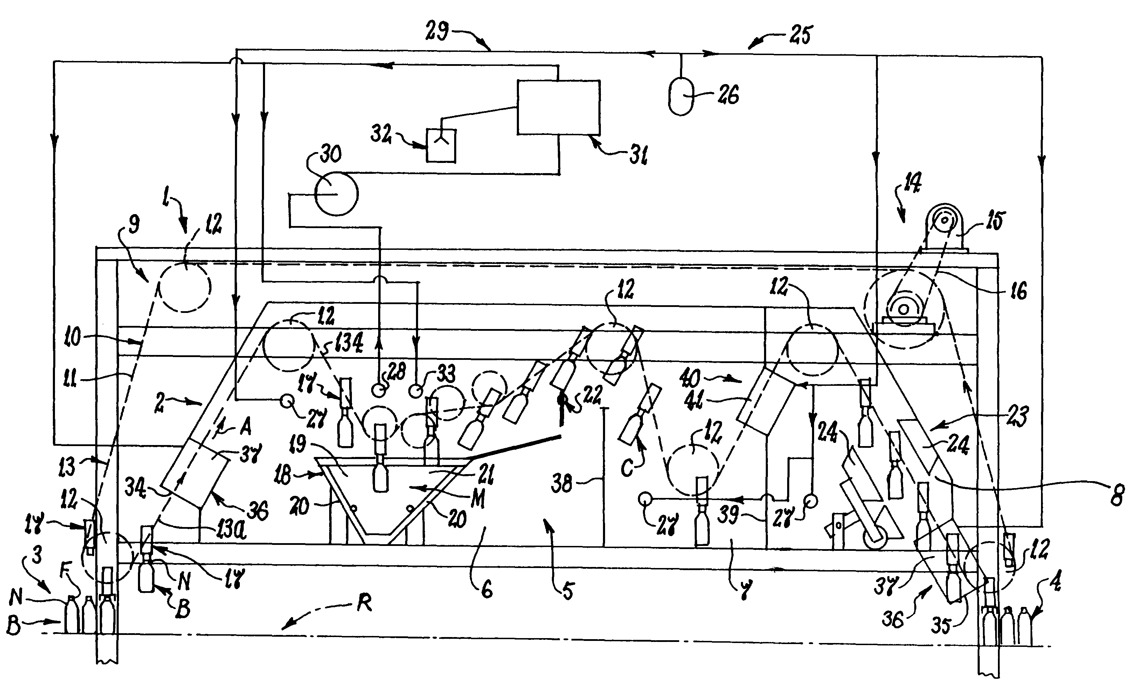

The following description refers to a preferred embodiment of the method and apparatus of the present invention. To facilitate an understanding of the invention, reference is made in the description to the accompanying drawing where the preferred apparatus for carrying out the preferred method is illustrated. It is to be understood that the invention is not limited to the embodiments as hereinafter described and as illustrated.

The drawing is a general side view of a coating apparatus 1 according to a preferred embodiment of the present invention, and shows coating apparatus 1 for dip coating cylindrical bottles B in a bath of liquid coating material M so as to apply a coating C to the outer surface thereof. Although this description refers to bottles B it should be appreciated that the method and apparatus are applicable to other glass containers and articles. As will become more apparent hereinafter, the apparatus 1 has features similar to the apparatus disclosed in Australian patent application 70941/91.

In this embodiment, the apparatus 1 is incorporated "in-line" with a bottle manufacturing line so that bottle coating occurs as part of the bottle manufacture. Conveniently, the apparatus 1 is located in the manufacturing line so that coating occurs downstream of a continuous container lehr (not shown). The apparatus 1 is located above a lehr conveyor R so that bottles B are taken from the conveyor R, coated and subsequently replaced on the conveyor R without interruption or disruption to the bottle manufacturing line or process generally. In particular, movement of the bottles B along the conveyor R from the lehr, and otherwise upstream, need not be delayed for coating. It should be understood that the reference to the lehr conveyor R includes a lehr belt or a conveyor separate therefrom.

Although it is preferred that the method and apparatus be incorporated in-line so that pristine condition bottles are presented for coating, it is envisaged that the method and apparatus may also be used off-line for separate coating of bottles previously manufactured. Where this occurs, it is preferred that coating proceed within about 24 hours of manufacture, or at least before there is any bottle surface degradation that may adversely affect coating application. Further delays may require pre-treatment of the bottles B prior to coating. That pre-treatment may involve bottle cleaning and annealing to remove water or other impurities from the bottle surface.

In this embodiment, the bottles B may be presented to the apparatus 1 for coating with a bare glass outer surface. However, in an alternative embodiment, those bottles B may be hot-end treated so as to apply a tin coating to the outer surface, and over which the dip coating will be applied. That coating protects the glass outer surface and generally strengthens the bottles B. The tin coating will typically have a thickness of between 30 and 50 coating thickness units (ctu's).

The bottles B are presented to the apparatus 1 in a controlled heated condition so as to improve coating, and in particular reduce the likelihood of the applied coating material M "running" on or "dripping" from the bottles B, and assists coupling between the coating material M and bottles B. Moreover, the time required for thermal ageing of the coating C (as detailed hereinafter) prior to irradiation can be substantially reduced or eliminated.

In this embodiment, the bottles will be at a temperature of between about 50° an 150°C, and preferably between 60° and 80° on presentation to the apparatus 1. Typically, the bottles B will exit from the lehr at a temperature of about 140°C, so that the bottle temperature may be controlled by bottle cooling prior to presentation to the apparatus. The ability to use the heated condition of the bottles B as they exit from the lehr is a further advantageous reason for coating the bottles "in-line" during their manufacture.

In the apparatus 1, the bottles B are conveyed continuously along a coating path 2 in the direction of arrow A from an entry zone 3 to an exit zone 4 spaced apart along the lehr conveyor R. The bottles B are conveyed in a line formation composed of individual bottles B arranged one behind the other (not shown), or (as shown) lateral rows of bottles B arranged one behind the other to form the line. Rows of up to about forty-eight (48) bottles B are envisaged depending on the capacity of the bottle manufacturing line.

Conveyance of the bottles B along the coating path 2 includes collecting the bottles B at the entry zone 3 and depositing them at the exit zone 4. Collecting the bottles B includes picking them up from the lehr conveyor R, whilst depositing the bottles B includes putting them back down on the conveyor R. During conveyance along the coating path 2, the bottles B pass successively through an enclosed and sealed (from the surrounding air atmosphere) coating chamber 6 comprising a dipping zone 5 in which the bottles B are dip coated with the coating material M, a thermal ageing zone 7 in which the coating on the bottles B is thermally aged, and a curing zone 8 in which the coating on the bottles B is cured.

To achieve this conveyance, the apparatus 1 includes conveying means 9 having a conveying mechanism 10. That mechanism 10 includes an endless conveying member 11 mounted on support members 12 and movable continuously along a conveying path 13, a section 13a of which extends along the coating path 2 through the coating chamber 5.

The conveying mechanism 10 also includes a drive unit 14 for moving the conveying member 11 along the conveying path 13. That drive unit 14 includes a drive motor 15, such as an electric drive motor, coupled to the conveying member 11 either directly (not shown) or through a suitable belt and pulley or chain and sprocket drive transmission 16 (as shown).

The conveying means 9 also includes a series of bottle pick-up mechanisms 17 spaced apart along and connected to the conveying member 11 for movement therewith. The mechanisms 17 operate in turn to releasably grip and pick up bottles B from the conveyor R at the entry zone 3, carry them along the coating path 2, through the coating chamber 5 and in particular the dipping zone 6, thermal ageing zone 7 and curing zone 8, to replace the coated bottles B on the conveyor R toward the exit zone 4 and release the bottles B. Each pick-up mechanism 17 holds the bottles B at an upper neck N thereof, adjacent finish F so that they generally depend from the mechanism 17 for dipping into the bath of coating material M. The mechanisms 17 hold the bottles B in upright, stable suspension, and do not rotate the bottles B about their central axes.

The pick up mechanims 17 are of any suitable construction and operation and may be constructed and operate as disclosed in Australian patent application 70941/91.

The speed of movement of the conveying member 11 is selected so that the bottles B at the entry zone 3 are picked up by passing pick-up mechanisms 17 at a rate about equal to their rate of arrival at the entry zone 3. In this way, bottles B moving downstream from the lehr are not unduly delayed in their manufacturing process. The speed may be set so that the bottles B move at between about 200 and 600 bottles per minute, when arranged in lateral rows of between about 22 and 48 per row. Thus, between about 9 and 13 rows of bottles B are moved along the coating path 2 per minute.

The section 13a of the conveying path 13 extending along the coating path 2 through the dipping zone 6 is configured such that bottles B held by the pick-up mechanisms 17 move downwardly into the bath of liquid coating material M in a dipping action. Conveying path section 13a adjacent the bath of coating material M is of a generally arcuate shape so that as the pick-up mechanism 17 moves along the section 13a, gripped bottles B are moved into and out of the bath of coating material M. The bottles B move along the coating path 2 whilst in the bath. The coating path 2 is adjustable so that the rate of dipping into the bath of liquid coating material M, the time of maximum immersion and the rate of withdrawal from the bath may be varied to obtain the coating thickness desired. Adjustment of the coating path 2 may include adjustment of the conveying path 13, and in particular section 13a adjacent the bath of coating material M.

The period and rate of bottle dipping may vary according to the nature and shape of the bottles B as well as the composition of the coating material M and the coating desired. In general terms, dipping will occur for a period and at a rate sufficient to apply an acceptable coating C to those bottles B. In this embodiment the dipping period is of the order of about 10 seconds in order to produce a uniform coating of between about 3 and 5 µm (microns) in thickness (after curing) on the bottles B, although a coating thickness of up to about 10 µm (microns) (after curing) may be applied about the heel and across the base of each bottle B. This added thickness assists in protecting the bottles B during subsequent use. Bottle dipping period and rate can be adjusted by locally varying the generally arcuate shape of path section 13a, particularly immediately adjacent the bath of coating material M.

The apparatus 1 includes a vessel 18 within the dipping zone 6 for holding the bath of liquid coating material M. The vessel 18 is of any shape and size suitable for bottle dipping. The vessel 18 has an open top 19, a pair of side walls 20 and a pair of end walls 21. The side walls 20 extend transversely of the coating path 2 and converge downwardly from the open top 19 so that the end profile of the vessel 18 approximates the line of bottle movement through the bath of coating material M. This may minimize the amount of excess coating material M held in the vessel 18 during coating. The open top 19 may be partially closed or at least shielded to minimize ageing or curing of the coating material M therein, and thus extend bath life of that material M.

The apparatus 1 also includes provision for removal of any coating material drip formations at the base of the bottles B as they exit from the vessel 18. That is achieved, in this embodiment, by applying a jet or blast of hot gas, to the bottle bases as they leave the vessel 18, the gas jet or blast separating the drips from the coating material. The gas jet or blast may be provided by a gas nozzle 22 mounted adjacent the vessel 18 and connected to a source of hot gas (not shown). To facilitate drip removal, the apparatus 1 arranges for the drips to concentrate in a corresponding position on each bottle B as the bottle passes the gas nozzle 22. This is achieved by tilting the bottles B suspended from the pick up mechanisms 17 so that any excess coating material M forms a drip at the lower most region of the heel of the bottles B.

The coating material M is of any suitable composition. In preferred embodiments of the method and apparatus of the present invention suitable coating materials include the polymers as disclosed in Australian patent application 15269/88.

In one particular embodiment, the coating material M contains a methyl ethyl ketone (MEK) volatile thinning solvent. Accordingly, the bath of coating material M in the vessel 18 is maintained at a temperature below the evaporation or boiling point of the solvent. In this particular embodiment, the coating material M in the vessel 18 is maintained at an ambient temperature of up to about 30°C, whilst the bottles B are at a temperature of between about 60° and 75°C as they enter the coating material M.

In this embodiment, the applied coating material M is thermally aged within ageing zone 7 in order to remove the MEK solvent from the coating material prior to curing. Heat energy for that ageing is supplied by the heated bottles themselves, in this embodiment, although separate heating means (not shown) may be incorporated in the ageing zone 7 as required. The conveying path section 13a within the ageing zone 7 is of a length selected to achieve satisfactory thermal ageing of the bottles B prior to curing of the coating material M.

In this embodiment, the aged coating material M is cured within the curing zone 8 by subjecting the material M to ultraviolet light radiation. Irradiation occurs whilst the bottles B are held by the pick up mechanisms 17, and is provided by ultraviolet light radiation means 23 in curing zone 8. The radiation means 23 comprises radiation units 24, arranged on opposite sides of the conveying path 13 so as to direct radiation toward bottles B passing therebetween. The conveying path 13, as it passes between the radiation units 24, extends downwardly, and the radiation units 24 are angled so as to direct radiation generally across the conveying path 13. With the bottles B suspended downwardly from the pick up mechanisms 17, they are fully exposed to the radiation of the radiation units 24.

The apparatus 1 provides for the coating method to be conducted in an atmosphere inert to the coating material M. In this embodiment, the inert atmosphere consists of or comprises a nitrogen gas atmosphere which is inert to the preferred resin/MEK solvent coating material M. The inert atmosphere has less than 5% oxygen in this embodiment, and preferably less than 2%.

The inert atmosphere is provided in the curing zone 8.

The use of a nitrogen atmosphere in the curing zone 8 enables a thinner coating to be satisfactorily applied to the bottles B without reducing bottle strength. A surprising result from using the nitrogen atmosphere in the curing zone 8 is that a thinner coating of below 5 µm (microns), such as between 1 and 3 µm (microns), enhances the strength of the bottles B more than an air cured coating of between 5 and 10 µm (microns) in thickness. The reason for this is believed to be the uniform curing which occurs throughout the coating and avoids internal stress arising within the coating with air curing. The oxygen in air curing inhibits the curing process which results in tensile stress in the bottle surface, thereby reducing the strengthening effect of the coating.

In addition, the use of a nitrogen atmosphere in the curing zone 8, rather than an air atmosphere, may reduce the energy capacity of the radiation means 23 required to achieve satisfactory curing. In that regard, in using ultraviolet light radiation, radiation units 24 of reduced energy capacity may be employed with commensuate capital and operating cost savings.

The inert atmosphere is also provided in the thermal ageing zone 7. The provision of a nitrogen atmosphere in this zone 7 minimises the potential risk of fire and explosion originating with the evaporating solvent, when compared with an air atmosphere, and particularly one containing 10% or more oxygen.

The inert atmosphere is also provided in the dipping zone 6. Thus, in this embodiment, the inert atmosphere surrounds the coating vessel 18 so that bottles B are dipped in the coating material M while in the inert atmosphere.

The use of a nitrogen atmosphere in this dipping zone 6 may be particularly advantageous where coatings of 1 to 3 µm (microns) are being applied to the bottles B. Such thin coatings may be formulated so as to have a reduced viscosity thereby improving bottle coverage, particularly into surface flaws of the bottles, and improve run-off of excess material following immersion, and leaving a coating of reduced, even thickness. This reduced viscosity may be achieved with a formulation having a higher solvent content. The provision of a nitrogen atmosphere, rather than an air atmosphere, in the use of the higher solvent content coating material M further reduces the risk of fire and explosion arising from solvent evaporation.

In this embodiment of the present invention, the inert atmosphere region extends with the coating chamber 5 along the entire coating path 2 between the entry and exit zones 3,4.

In this embodiment, controlled atmosphere means 25 is provided for maintaining a balanced inert atmosphere within the coating chamber 5. That controlled atmosphere means 25 includes an inert gas supply source 26, one or more inlets 27 to the coating chamber 5 through which clean, fresh inert gas is supplied from the gas supply source 26, and at least one outlet 28 through which the inert gas (and entrained solvent) can be removed. In this embodiment, the controlled atmosphere means 25 operates to maintain the evaporated solvent content within the inert atmosphere at or below a predetermined level. That level is up to about 25%, and may be no greater than between about 5% and 10%, of the inert atmosphere. That level can be achieved by control flow of the inert gas through the zones 6, 7 and 8.

In this embodiment, at least one gas inlet 27 is provided downstream of at least one gas outlet 28 relative to travel of the bottles B along the coating path 2. In this way, a gas pressure gradient between the inlet(s) 27 and outlet(s) 28 will cause inert gas to flow in a direction counter to the direction of bottle and coating travel, thereby entraining the solvent into the inert gas as it flows from the inlet(s) 27 to the outlet(s) 28. In this embodiment, at least one gas inlet 27 is provided in the curing zone 8 so that the flow of gas is away from the radiation means 23. This, in turn, tends to keep the evaporating solvent within the thermal ageing zone 7 away from the radiation means 23, and thereby minimize potential damage to the ultraviolet light radiation units 24 by the solvent.

In the preferred embodiment (as shown) inlets 27 are provided in each of the zones 6,7,8, while an outlet 28 is provided in the dipping zone 6.

The inert gas may be supplied at any suitable temperature that may facilitate container coating. Where the gas is inlet adjacent the radiation means 23, the temperature may be selected so as to act as a coolant to the radiation units 24, and curing zone 8 generally.

In this embodiment, the gas jet or blast directed toward the bottles B from the gas nozzle 22, as they exit from the coating vessel 18, is provided from the inert gas supply source 26.

In this embodiment, the inert gas supply source 26 may be incorporated into a solvent recovery system 29 which operates to recover for recycling the solvent entrained within the inert gas removed from the coating chamber 5. Such an arrangement may not only reduce coating costs, through re-use of the solvent, but also minimise solvent emissions.

In one embodiment, a nitrogen atmosphere closed loop solvent recovery system 29, as developed by Airco of the United States of America, may be adapted to provide the inert atmosphere gas and recover the solvent. That recovery system 29 includes an extraction pump 30 for removing inert gas with extrained solvent through the gas outlet 28 and a processing unit 31 for separating and recovering the solvent. The recovered solvent is stored in a holding tank 32 within the system 29 for reuse upon demand. The processing unit 31 provides for recycling of the inert gas, stripped of the recovered solvent, through one or more further inlets 33 into the coating chamber 5. As shown in this preferred embodiment the further inlet 33 is provided in the dipping zone 6.

In this embodiment, the integrity of the inert atmosphere within zones 6, 7 and 8 is maintained, and the evaporated solvent is contained, about the coating path 2 by gas sealing the coating chamber 5 from the surrounding air atmosphere. In this embodiment, the coating chamber 5 has an inlet 34 and outlet 35 at the coating path entry and exit zones 3, 4, respectively, and at which gas seals 36 are provided to enable bottle passage therethrough while inhibiting air ingress and solvent egress. Air ingress is further inhibited by maintaining the gas atmosphere within the coating chamber at a pressure higher than the pressure of the surrounding air atmosphere.

Any suitable gas seals 36 well known to those skilled in the relevant art may be used. In this embodiment, the gas seals 35 include seal devices 37 generating inert gas curtains supplied from the solvent recovery system 29, including the inert gas supply source 26. The seal devices 37 are each constructed so that at least one pick-up mechanism 17 and associated gripped bottles B are accommodated at all times within each device 37 during apparatus operation. To that end, the seal devices 37 each extend along the conveying path 13 a distance selected so that as one pick-up mechanism 17 leaves a seal device 37, a successive pick-up mechanism 17 enters that seal device 37. In this way, the pick-up mechanism 17 and bottles B assist in closing the inlet 34 and outlet 35 against incoming air flow and outgoing inert gas flow.

In addition, the closed and sealed coating chamber 5 is divided so as to define the separate dipping zone 6, ageing zone 7 and curing zone 8. Division is achieved by separating walls 38 and 39 extending substantially across the chamber 5, but through which the coating path 2 extends between zones 6, 7, 8. The separating walls 38 and/or 39 may incorporate further gas seals 40 (as shown in wall 39 but not shown in wall 38) at least to inhibit gas flow between the zones 6, 7 and 8 in the direction of bottle conveyance. The separating walls 38,39 together with gas seals 40, enable development of gas pressure differentials within the zones 6, 7 and 8 providing a gas pressure gradient along the coating path 2. In particular, the gas pressure atmosphere in the thermal ageing zone 7, which in turn is maintained at a pressure higher than the gas pressure atmosphere in the dipping zone 6. These pressure differentials encourage a flow of fresh inert gas, fed into the curing zone 8 to flow into the thermal ageing zone 7 and then to the dipping zone 6, thus inhibiting solvent flow in the direction of movement of the bottles B and, in particular into the curing zone 8. The gas flow rate is balanced by controlling the pressure in the curing zone 8, and the gas flow at the or each gas seal 40.

The or each gas seal 40 may be a seal device 41 generating inert gas curtains through which the coating path 2 extends. Those seal devices 41 may be box tunnel seal devices the same as or similar to the seal devices 37, or of alternative configurations,

In using the above described embodiment of the method and apparatus of the present invention, glass bottles B arrive at the entry zone 3 on a lehr conveyor R. If necessary, a stacker mechanism (not shown) may be located adjacent the entry zone 3 so as to arrange the bottles B individually or in rows, in a sequential line, ready for pick-up.

The conveying member 11 is continuously moving so that successive pick-up mechanisms 17 approach and pass through the entry zone 3. On entering that zone 3, each mechanism 17 in turn operates to grip respective bottles B.

The pick-up mechanism 17 and gripped bottles B are then moved by the conveying member 11 continuously along the coating path 2 toward the exit zone 4. During that movement, the bottles B enter the coating chamber 5 through the gas seal 36 at the chamber inlet 34, move through the coating chamber 5, and then out of the chamber 5 through the gas seal 36 at the chamber outlet 35. In moving through the coating chamber 5, the bottles B are sequentially dipped in the bath of coating material M in the vessel 18 within the dipping zone 6, presented to the gas nozzle 22 for removal of any material drips formed thereon, thermally aged within the thermal ageing zone 7, and exposed to ultraviolet light irradiation from radiation units 24 within curing zone 8 for curing of the coating material. The conveying member 11 then guides the bottles B back onto the lehr conveyor R where the pick-up mechanisms 17 again operate to release the bottles B.

The article coating method and apparatus improvement of the present invention enables problems associated with the use of a coating material solvent, such as MEK, to be alleviated. In particular, operational safety of the method and apparatus has been enhanced, as has cleanliness because of the control of solvent emissions.

The present invention enables greater varients in the coating thickness to be applied, and in particular a reduction in the thickness compared with previous arrangements.

The present invention also enables a reduction in the energy consumption required to cure the container coating. Associated with that is the prospect of long life for the radiation means, such as ultraviolet light radiation units used for that curing.

The improvement of the present invention leads to a more cost effective and efficient method and apparatus for achieving container coating.

The use of a sealed atmosphere in which coating occurs enables a clean coating environment to be maintained. This in turn minimises container and coating contamination during the coating procedure, leading to reduced coating imperfections.

## Claims

1. A method for coating exterior surfaces of heated glass containers exiting from a lehr at a controlled temperature, including: conveying the containers along a coating path extending successively through a dipping zone, a thermal ageing zone and a curing zone of a coating chamber so that the containers are arranged in a non-contact relationship with one another; dipping the containers being conveyed through the dipping zone at least partially into a bath of ultraviolet light radiation curable liquid coating material so as to apply a coating of the coating material to exterior surfaces of the containers; thermally ageing the applied coating of containers being conveyed through the thermal ageing zone; and, subjecting the coated containers being conveyed through the curing zone to irradiation with ultraviolet light radiation for curing the coating, the containers being dipped, thermally aged and irradiated within an atmosphere inert to the coating material, the inert gas atmosphere having a pressure gradient extending along the coating path causing flow of the inert gas within the coating chamber generally in a direction from the curing zone toward the dipping zone, the inert gas thereby entraining coating material vapours for removal away from the curing zone.

2. A method as claimed in claim 1, wherein the coated containers are irradiated within a nitrogen gas atmosphere.

3. A method as claimed in claim 1, wherein the dipping of the containers within the coating material, thermal ageing of the applied coating and irradiation of the coated containers occurs within a nitrogen gas atmosphere.

4. A method as claimed in claim 1, wherein pressure of the inert gas atmosphere in the curing zone is higher than pressure of the gas atmosphere in the thermal ageing zone, which in turn is higher than the pressure of the gas atmosphere in the dipping zone so that inert gas flows in a direction from the curing zone toward the thermal ageing zone and from the thermal ageing zone toward the dipping zone.

5. A method as claimed in claim 1, wherein fresh inert gas is supplied to the curing zone and coating material vapour entrained inert gas is withdrawn from the dipping zone.

6. A method as claimed in claim 1, wherein fresh inert gas is supplied to the termal ageing zone.

7. A method as claimed in claim 1, wherein fresh inert gas is supplied to the dipping zone.

8. A method as claimed in claim 1, and further including sealing the inert gas atmosphere in the coating chamber from a surrounding air atmosphere so as to inhibit ingress of air into the coating chamber and egress of coating material vapour from the coating chamber.

9. A method as claimed in claim 8, wherein the inert gas atmosphere has a pressure which is higher than the surrounding air atmosphere pressure.

10. A method as claimed in claim 8, and further including sealing the thermal ageing zone from the curing zone so as to inhibit entry of coating material vapours from the thermal ageing zone into the curing zone.

11. A method as claimed in claim 8, and further including sealing the dipping zone from the thermal ageing zone so as to inhibit entry of coating material vapours from the dipping zone into the thermal ageing zone.

12. A method as claimed in claim 1, and further including removing the inert gas and entrained coating material vapours from the coating chamber, processing the gas to recover the coating material vapours, and recycling the inert gas stripped of the coating material vapours to the coating chamber.

13. A method as claimed in claim 12, wherein the stripped inert gas is recycled into the dipping zone.

14. Apparatus for coating exterior surfaces of heated glass containers exiting from a lehr at a controlled temperature, including: a coating chamber having a dipping zone, a thermal ageing zone and a curing zone; conveying means defining a coating path extending successively through the dipping, thermal ageing and curing zones of the coating chamber, and operable to convey the containers along the coating path so that the containers are arranged in a non-contact relationship with one another; a coating vessel in the dipping zone for containing a bath of ultraviolet light radiation curable liquid coating material, the conveying means being arranged to dip containers being conveyed thereby along the coating path so as to apply a coating of the coating material to exterior surfaces of the containers; radiation means in the curing zone operable to subject the coated containers being conveyed along the coating path to irradiation with ultraviolet light radiation for curing the coating; and, means providing a controlled atmosphere in the coating chamber so that the atmosphere within the dipping zone, thermal ageing zone and curing zone is inert to the coating material, the controlled atmosphere means including at least one inlet to the coating chamber for supplying fresh inert gas thereto and at least one outlet from the coating chamber for withdrawal of inert gas therefrom, the inlet and outlet being located so that flow of the inert gas within the coating chamber is generally in a direction from the curing zone toward the dipping zone, the inert gas thereby entraining coating material vapours for removal away from the curing zone.

15. Apparatus as claimed in claim 14, wherein the controlled atmosphere means is operable to provide a nitrogen gas atmosphere in at least the curing zone.

16. Apparatus as claimed in claim 14, wherein the controlled atmosphere means is operable to provide a nitrogen gas atmosphere throughout the coating chamber.

17. Apparatus as claimed in claim 14, wherein the controlled atmosphere means includes at least one inlet in the curing zone and at least one outlet in the dipping zone so that the inert gas flows in a direction from the curing zone toward the dipping zone, the inert gas entraining coating material vapours for removal away from the curing zone.

18. Apparatus as claimed in claim 14, wherein the coating atmosphere means includes at least one inlet to the thermal ageing zone for supplying fresh inert gas thereto.

19. Apparatus as claimed in claim 14, wherein the controlled atmosphere means includes at least one inlet to the dipping zone for supplying fresh inert gas thereto.

20. Apparatus as claimed in claim 14, wherein the coating chamber has an inlet through which the containers enter the chamber and an oulet through which the containers exit the chamber, and further including gas seals at the inlet and outlet enabling container passage therethrough whilst inhibiting ingress of air into the coating chamber and egress of coating material vapour from the coating chamber.

21. Apparatus as claimed in claim 20, and further including a gas seal sealing the thermal ageing zone from the curing zone to inhibit entry of coating material vapours from the thermal ageing zone into the curing zone.

22. Apparatus as claimed in claim 20, and further including a gas seal sealing the dipping zone from the thermal ageing zone to inhibit entry of coating material vapours from the dipping zone into the thermal ageing zone.

23. Apparatus as claimed in claim 14, and further including means processing inert gas and entrained coating material vapours removed from the coating chamber so as to recover the coating material vapours and recycle the inert gas stripped of the coating material vapours to the coating chamber.

24. Apparatus as claimed in claim 23, wherein the processing means includes an inlet into the dipping zone and into which stripped inert gas is recycled into the coating chamber.

## Patentansprüche

1. Verfahren zum Beschichten der Außenflächen erwärmter Glasbehälter, die einen Glühofen mit einer geregelten Temperatur verlassen, das folgendes beinhaltet: Transport der Behälter entlang einer Beschichtungsstraße, die nacheinander durch eine Tauchzone, eine Wärmealterungszone und eine Aushärtzone einer Beschichtungskammer führt, so daß die Behälter in einer berührungslosen Beziehung zueinander angeordnet sind; Tauchen der durch die Tauchzone transportierten Behälter zumindest teilweise in ein Bad mit unter ultraviolettem Licht aushärtbarem flüssigem Beschichtungsmaterial, um eine Schicht des Beschichtungsmaterials auf den Außenflächen der Behälter aufzubringen; thermisches Altern der aufgebrachten Beschichtung der durch die Wärmealterungszone transportierten Behälter; und Aussetzen der durch die Aushärtzone transportierten Behälter einer Bestrahlung mit ultravioletter Lichtstrahlung zum Aushärten der Beschichtung, wobei die Behälter in einer gegenüber der Beschichtung reaktionsträgen Atmosphäre getaucht, thermisch gealtert und bestrahlt werden, wobei die Inertgasatmosphäre ein Druckgefälle entlang der Beschichtungsstraße aufweist, durch das das Inertgas veranlaßt wird, innerhalb der Beschichtungskammer im allgemeinen in Richtung von der Aushärtzone zur Tauchzone zu strömen, wodurch das Inertgas Dämpfe des Beschichtungsmaterials mitnimmt, um sie aus der Aushärtzone zu entfernen.

2. Verfahren nach Anspruch 1, bei dem die beschichteten Behälter in einer Stickstoffgasatmosphäre bestrahlt werden.

3. Verfahren nach Anspruch 1, bei dem das Tauchen der Behälter in das Beschichtungsmaterial, die Wärmealterung der aufgebrachten Beschichtung und die Bestrahlung der beschichteten Behälter in einer Stickstoffgasatmosphäre erfolgen.

4. Verfahren nach Anspruch 1, bei dem der Druck der Inertgasatmosphäre in der Aushärtzone höher ist als der Druck der Gasatmosphäre in der Wärmealterungszone, der wiederum höher ist als der Druck der Gasatmosphäre in der Tauchzone, so daß das inerte Gas in Richtung von der Aushärtzone zur Wärmealterungszone und von der Wärmealterungszone zur Tauchzone strömt.

5. Verfahren nach Anspruch 1, bei dem der Aushärtzone frisches Inertgas zugeführt und das mit Dämpfen des Beschichtungsmaterials befrachtete Inertgas der Tauchzone entzogen wird.

6. Verfahren nach Anspruch 1, bei dem der Wärmealterungszone frisches Inertgas zugeführt wird.

7. Verfahren nach Anspruch 1, bei dem der Tauchzone frisches Inertgas zugeführt wird.

8. Verfahren nach Anspruch 1, das des weiteren ein Abdichten der Inertgasatmosphäre in der Beschichtungskammer gegenüber der Umgebungsluftatmosphäre enthält, um das Eindringen von Luft in die Beschichtungskammer und das Entweichen von Dämpfen des Beschichtungsmaterials aus der Beschichtungskammer zu verhindern.

9. Verfahren nach Anspruch 8, bei dem der Druck der Inertgasatmosphäre höher ist als der Druck der Umgebungsluftatmosphäre.

10. Verfahren nach Anspruch 8, das des weiteren ein Abdichten der Wärmealterungszone gegenüber der Aushärtzone enthält, um ein Eindringen der Dämpfe des Beschichtungsmaterials aus der Wärmealterungszone in die Aushärtzone zu verhindern.

11. Verfahren nach Anspruch 8, das des weiteren ein Abdichten der Tauchzone gegenüber der Wärmealterungszone enthält, um ein Eindringen der Dämpfe des Beschichtungsmaterials aus der Tauchzone in die Wärmealterungszone zu verhindern.

12. Verfahren nach Anspruch 1, das des weiteren ein Entfernen des mit den Dämpfen des Beschichtungsmaterials befrachteten Inertgases aus der Bschichtungskammer, ein Aufbereiten des Gases zur Rückgewinnung der Dämpfe des Beschichtungsmaterials und ein Rückführen des von den Dämpfen des Beschichtungsmaterials gereinigten Inertgases in die Beschichtungskammer enthält.

13. Verfahren nach Anspruch 12, bei dem das gereinigte Inertgas in die Tauchzone zurückgeführt wird.

14. Vorrichtung zum Beschichten der Außenflächen erwärmter Glasbehälter, die einen Glühofen mit einer geregelten Temperatur verlassen, das folgendes beinhaltet: eine Beschichtungskammer mit einer Tauchzone, einer Wärmealterungszone und einer Aushärtzone; eine Fördereinrichtung, die eine Beschichtungsstraße definiert, die nacheinander durch die Tauchzone, die Wärmealterungszone und die Aushärtzone der Beschichtungskammer führt und so betrieben werden kann, daß die Behälter entlang der Beschichtungsstraße transportiert werden, während sie in einer berührungslosen Beziehung zueinander angeordnet sind; einen Beschichtungskessel in der Tauchzone zur Aufnahme eines Bades flüssigen unter ultraviolettem Licht aushärtbaren Beschichtungsmaterials, wobei die Fördereinrichtung so angeordnet ist, daß die von ihr transportierten Behälter getaucht werden, um eine Schicht des Beschichtungsmaterials auf den Außenflächen der Behälter aufzubringen; eine Bestrahlungseinrichtung in der Aushärtzone, die so betrieben werden kann, daß sie die entlang der Beschichtungsstraße transportierten beschichteten Behälter einer Bestrahlung mit ultravioletter Lichtstrahlung zum Aushärten der Beschichtung aussetzt; und Einrichtungen zum Bereitstellen einer Schutzgasatmosphäre in der Beschichtungskammer, so daß die Atmosphäre in der Tauchzone, der Wärmealterungszone und der Aushärtzone gegenüber dem Beschichtungsmaterial reaktionsträge ist, wobei die Einrichtungen zum Bereitstellen einer Schutzgasatmosphäre mindestens einen Einlaß in die Beschichtungskammer zum Zuführen frischen Inertgases und mindestens einen Auslaß aus der Beschichtungskammer zum Abziehen der Inertgases daraus enthalten, wobei der Ein- und Auslaß so angeordnet sind, daß die Strömung des Inertgases im allgemeinen in Richtung von der Aushärtzone zur Tauchzone erfolgt, wodurch das Inertgas Dämpfe des Beschichtungsmaterial mitnimmt, um sie aus der Aushärtzone zu entfernen.

15. Vorrichtung nach Anspruch 14, bei der die Einrichtung zum Bereitstellen einer Schutzgasatmosphäre so betrieben werden kann, daß sie mindestens in der Aushärtzone eine Stickstoffgasatmopsphäre bereitstellt.

16. Vorrichtung nach Anspruch 14, bei der die Einrichtung zum Bereitstellen einer Schutzgasatmosphäre so betrieben werden kann, daß sie innerhalb der gesamten Beschichtungskammer eine Stickstoffgasatmopsphäre bereitstellt.

17. Vorrichtung nach Anspruch 14, bei der die Einrichtung zum Bereitstellen einer Schutzgasatmosphäre mindestens einen Einlaß in der Aushärtzone und mindestens einen Auslaß in der Tauchzone enthält, so daß das Inertgas in Richtung von der Aushärtzone zur Tauchzone strömt, wobei es die Dämpfe des Beschichtungsmaterials zum Entfernen aus der Aushärtzone mitnimmt.

18. Vorrichtung nach Anspruch 14, bei der die Einrichtung zum Bereitstellen einer Schutzgasatmosphäre mindestens einen Einlaß in die Wärmealterungszone zur Zufuhr frischen Inertgases enthält.

19. Vorrichtung nach Anspruch 14, bei der die Einrichtung zum Bereitstellen einer Schutzgasatmosphäre mindestens einen Einlaß in die Tauchzone zur Zufuhr frischen Inertgases enthält.

20. Vorrichtung nach Anspruch 14, bei der die Beschichtungskammer einen Einlaß hat, durch den die Behälter in die Kammer gelangen, und einen Auslaß, durch den die Behältr die Kammer verlassen, sowie des weiteren Gasdichtungen am Ein- und Auslaß, die den Durchgang der Behälter gestatten, während sie das Eindringen von Luft in die Beschichtungskammer und das Entweichen von Dämpfen des Beschichtungsmaterials aus der Beschichtungskammer verhindern.

21. Vorrichtung nach Anspruch 20, die des weiteren eine gasdichte Abdichtung der Wärmealterungszone gegenüber der Aushärtzone enthält, um das Eindringen von Dämpfen des Beschichtungsmaterials aus der Wärmealterungszone in die Aushärtzone zu verhindern.

22. Vorrichtung nach Anspruch 20, die des weiteren eine gasdichte Abdichtung der Tauchzone gegenüber der Wärmealterungszone enthält, um das Eindringen von Dämpfen des Beschichtungsmaterials aus der Tauchzone in die Wärmealterungszone zu verhindern.

23. Vorrichtung nach Anspruch 14, die des weiteren Einrichtungen zum Aufbereiten des Inertgases und der aus der Beschichtungskammer mitgenommenen Dämpfe des Beschichtungsmaterials enthält, um die Dämpfe des Beschichtungsmaterials zurückzugewinnen und das von den Dämpfen des Beschichtungsmaterials gereinigte Inertgas zur Beschichtungskammer zurückzuführen.

24. Vorrichtung nach Anspruch 23, bei der die Aufbereitungseinrichtung einen Einlaß in die Tauchzone enthält, durch den das gereinigte Inertgas in die Beschichtungskammer zurückgeführt wird.

## Revendications

1. Procédé d'enduction des surfaces extérieures de récipients de verre chauffés sortant d'un tunnel de recuit à une température régulée, comprenant de : convoyer les récipients le long d'un chemin d'enduction qui passe successivement par une zone de trempage, une zone de traitement thermique et une zone de réticulation d'une chambre d'enduction de sorte que les récipients soient' disposés en une relation sans contact l'un avec l'autre; tremper les récipients à convoyer vers la zone de trempage dans au moins partiellement un bain de matériau d'enduction liquide réticulable par rayonnement de lumière ultra-violette de façon à appliquer une couche de matériau d'enduction sur les surfaces extérieures des récipients; traiter thermiquement l'enduction déposée sur les récipients en cours de convoyage vers la zone de traitement thermique; et soumettre les récipients enduits en cours de convoyage vers la zone de réticulation par irradiation d'un rayonnement de lumière ultra-violette pour réticuler l'enduit, les récipients étant trempés, traités thermiquement et irradiés dans une atmosphère inerte pour le matériau d'enduction, l'atmosphère de gaz inerte ayant un gradient de pression le long du chemin d'enduction, ce qui provoque l'écoulement dans la chambre d'enduction généralement dans le sens de la zone de réticulation vers la zone de trempage, le gaz inerte entrainant ainsi les vapeurs de matériau d'enduction pour les extraire de la zone de réticulation.

2. Procédé selon la revendication 1, où on irradie les récipients enduits dans une atmosphère de gaz azote.

3. Procédé selon la revendication 1, où on réalise le trempage des récipients dans le matériau d'enduction, le traitement thermique de l'enduit déposé et l'irradiation des récipients enduits dans une atmosphère de gaz azote.

4. Procédé selon la revendication 1, où la pression de l'atmosphère de gaz inerte dans la zone de réticulation est supérieure à la pression de l'atmosphère de gaz dans la zone de traitement thermique, qui à son tour est supérieure à la pression de l'atmosphère de gaz dans la zone de trempage de sorte que le gaz inerte s'écoule dans le sens de la zone de réticulation vers la zone de traitement thermique et de la zone de traitement thermique vers la zone de trempage.

5. Procédé selon la revendication 1, où on introduit du gaz frais inerte dans la zone de réticulation et on extrait la vapeur de matériau d'enduction entrainée par le gaz inerte de la zone de trempage.

6. Procédé selon la revendication 1, où on introduit du gaz frais inerte dans la zone de traitement thermique.

7. Procédé selon la revendication 1, où on introduit du gaz frais inerte dans la zone de trempage.

8. Procédé selon la revendication 1, où on rend hermétique l'atmosphère de gaz inerte dans la chambre d'enduction vis à vis de l'atmosphère d'air ambiante en plus de manière à s'opposer à l'entrée d'air dans la chambre d'enduction et à la sortie de vapeur de matériau d'enduction de la chambre d'enduction.

9. Procédé selon la revendication 8, où l'atmosphère de gaz inerte a une pression qui est supérieure à la pression de l'atmosphère ambiante d'air.

10. Procédé selon la revendication 8, où en plus on isole la zone de traitement thermique de la zone de réticulation de façon à empêcher l'entrée de vapeurs de matériau d'enduction de la zone de traitement thermique dans la zone de réticulation.

11. Procédé selon la revendication 8, où en plus on isole la zone de trempage de la zone de traitement thermique de façon à empêcher l'entrée des vapeurs de matériau d'enduction de la zone de trempage dans la zone de traitement thermique.

12. Procédé selon la revendication 1, où en plus on extrait le gaz inerte et les vapeurs de matériau d'enduction entraînées de la chambre d'enduction, on traite le gaz pour récupérer les vapeurs de matériau d'enduction, et on recycle le gaz inerte débarrassé des vapeurs de matériau d'enduction dans la chambre d'enduction.

13. Procédé selon la revendication 12, où on recycle le gaz inerte épuré dans la zone de trempage.

14. Appareil d'enduction des surfaces extérieures de récipients de verre chauffés sortant d'un tunnel de recuit à température régulée, comprenant : une chambre d'enduction ayant une zone de trempage, une zone de traitement thermique et une zone de réticulation; des moyens de convoyage définissant un chemin d'enduction passant successivement par les zones de trempage, de traitement thermique et de réticulation de la chambre d'enduction, et fonctionnant pour convoyer les récipients le long du chemin de convoyage de sorte que les récipients soient disposés en relation sans contact l'un avec l'autre; une cuve d'enduction dans la zone de trempage pour contenir un bain de matériau d'enduction liquide réticulable par rayonnement de lumière ultra-violette, les moyens de convoyage étant disposés de façon à tremper les récipients en cours de convoyage pour appliquer une couche de matériau d'enduction sur les surfaces extérieures des récipients; des moyens de rayonnement pouvant fonctionner dans la zone de réticulation pour soumettre les récipients enduits convoyés le long du chemin d'enduction à une irradiation par lumière ultra-violette pour réticuler l'enduction; et, des moyens fournissant une atmosphère régulée dans la chambre d'enduction de sorte que l'atmosphère dans la zone de trempage, la zone de traitement thermique et la zone de réticulation soit inerte pour le matériau d'enduction, les moyens d'atmosphère régulée comprenant au moins une entrée dans la chambre d'enduction pour y introduire du gaz inerte frais et au moins une sortie de la chambre d'enduction pour en extraire le gaz inerte, l'entrée et la sortie étant placées de sorte que l'écoulement du gaz inerte dans la chambre d'enduction se fait généralement dans le sens de la zone de réticulation vers la zone de trempage, le gaz inerte entrainant ainsi les vapeurs de matériau d'enduction pour les extraire hors de la zone de réticulation.

15. Appareil selon la revendication 14, où les moyens d'atmosphère régulée fonctionnent pour fournir une atmosphère de gaz azote dans au moins la zone de réticulation.

16. Appareil selon la revendication 14, où les moyens d'atmosphère régulée fonctionnent pour fournir une atmosphère de gaz azote dans toute la chambre d'enduction.

17. Appareil selon la revendication 14, où les moyens d'atmosphère régulée comprennent au moins une entrée dans la zone de réticulation et au moins une sortie dans la zone de trempage, de sorte que le gaz s'écoule dans le sens de la zone de réticulation vers la zone de trempage, le gaz inerte entraînant les vapeurs de matériau d'enduction pour les extraire de la zone de réticulation.

18. Appareil selon la revendication 14, où les moyens d'atmosphère d'enduction comprennent au moins une entrée dans la zone de traitement thermique pour y introduire du gaz inerte frais.

19. Appareil selon la revendication 14, où les moyens d'atmosphère régulée comprennent au moins une entrée dans la zone de trempage pour y introduire du gaz inerte frais.

20. Appareil selon la revendication 14, où la chambre d'enduction a une entrée par où les récipients entrent dans la chambre et une sortie par laquelle les récipients quittent la chambre, et qui comprend en outre des sas étanches aux gaz à l'entrée et à la sortie en y permettant le passage des récipients tout en s'opposant à l'entrée d'air dans la chambre d'enduction et à la sortie de vapeur de matériau d'enduction de la chambre d'enduction.

21. Appareil selon la revendication 20, qui comprend en outre un sas étanche aux gaz isolant la zone de traitement thermique de la zone de réticulation pour empêcher l'entrée des vapeurs de matériau d'enduction de la zone de traitement thermique dans la zone de réticulation.

22. Appareil selon la revendication 20, qui comprend en outre un sas étanche aux gaz isolant la zone de trempage de la zone de traitement thermique pour empêcher l'entrée de vapeurs de matériau de la zone de trempage dans la zone de traitement thermique.

23. Appareil selon la revendication 14, qui comprend en outre des moyens de traitement de gaz inerte et des vapeurs de matériau d'enduction entrainées extraits de la chambre d'enduction de façon à récupérer les vapeurs de matériau d'enduction et à recycler le gaz inerte épuré des vapeurs de matériau d'enduction dans la chambre d'enduction.

24. Appareil selon la revendication 23, où les moyens de traitement comprennent une entrée dans la zone de trempage et où on recycle le gaz inerte épuré dans la chambre d'enduction.
